# EUROPEAN PATENT APPLICATION

(11) **EP 4 632 513 A1**
(43) Date of publication of application: **15.10.2025**
(21) Application number: 24178704.3
(22) Date of filing: 29.05.2024
(51) Int. Cl.: G05B 19/418, B25J 9/16

(54) **QUALITY CONTROL AUTOMATIC METHOD IN THE PRODUCTION OF SMALL METAL PARTS**

(30) Priority: 12.04.2024 IT 202400008317
(71) Applicant: DIMAC s.r.l., 15057 Tortona (Alessandria) (IT)
(72) Inventor: OTTAVIANO, Enrico, 15057 Tortona (AL) (IT); BRUMINI, Mario, 15057 Tortona (AL) (IT); NOCE, Guido Maria, 15057 Tortona (AL) (IT)
(74) Representative: Botti & Ferrari S.p.A.

(57) **Abstract**

The present invention relates to a quality control automatic method (100) in the production of small metal parts, comprising the following steps:
- provision (101) of a quality control automatic apparatus (1) on a sample basis of small metal parts;
- connection (103) of a control system (3) to the quality control automatic apparatus (1) on a sample basis;
- first storage (104) in the control system (3) of reference characteristic parameters of a plurality of typologies of small metal parts belonging to a control plan;
- second storage (105) in the control system (3) of admissible ranges of acceptance threshold values for each of the plurality of typologies of small metal parts;
- selection (107) and pick-up of a sample group (108) of a plurality of small metal parts from the plurality of typologies of small metal parts;
- typology test (109) of the sample group by automatic acquisition and comparison with the reference characteristic parameters;
- pick-up (111) and automatic measurement (112) of each small metal part of the sample group;
- automatic division (115) of the sample group into a first portion of compliant small metal parts and a second portion of non-compliant small metal parts based on the admissible ranges of acceptance threshold values;
- automatic analysis (118) of the control system (3) of dimensional data obtained from the sample group;
- validation (119) of the dimensional data of said second portion of non-compliant small metal parts;
- uploading (120) of the dimensional data in a memory device;
- interpolation (121) of a time evolution of the dimensional data in subsequent data acquisitions;
- display (122) of the interpolation and implementation (123) of correction operations.

## Description

### Field of application

In its more general aspect, the present invention relates to a method with automation features for the production and compliance test of small metal parts.

The present invention substantially, but not limitedly, relates to the field of small metal parts for which the matching with respect to preset threshold values and the presence or absence of undesirable defects are to be tested.

### Prior art

The need to optimize the production of the products manufactured with predetermined and stringent production specifications is known in the present field, in order to prevent the formation of defects and control the actual lack thereof since they could otherwise jeopardise the functionality of the products themselves.

As regards the small parts, such as, for example but not limitedly, screws, bots, nuts, washers, pins, etc., this need proves to be strongly felt especially for those intended for automatic assembly lines or safety devices, where the defectiveness of a product having a small size and/or a very small unit value, can generate inefficiencies and economic damages or even risks for people's health and safety.

In general, a percentage of discrepancy is generated by the qualitative wearing of the tools adopted in the production step.

The tool wear affects the quality of the manufactured products which progressively lose the original construction features, so that these products deviate as mentioned from the project design and become non-compliant due to exceeding the determined geometric tolerances or due to other defects.

There can also be other drawbacks due to the tool break, the presence of burrs, problems with the raw material or the like.

At present a cursory control of the small parts is already often performed, on a sample basis on the produced pieces, to verify the fulfilment of the main specifications and allow the operator to correct any detected anomaly during construction.

At present a strict control of the small parts is also often performed on a sample basis on the produced pieces to verify the fulfilment of all the specifications, in order to intercept and eliminate any defective production batch.

For the most critical applications, at present a total control of the produced small parts is also usually performed to select and reject any defective piece.

This control is usually subsequent and independent from the production, therefore it allows to select and reject the defective pieces, but it has no direct repercussions on the line organization.

At present optical detectors are often used under which the small parts are passed, detecting the dimensional and surface properties of each small part, sending the information to a control system in which the images are compared with the defined design specifications.

However, the solutions currently adopted by the operators in the production still result in the formation of a high quantity of waste, while the other adopted solutions produce results only in a time after production, and prove to be useful for selecting and rejecting the defective products but too late to effectively intervene on the production process.

In particular, the strict control requires a laboratory managed by a personnel specialized in quality control who deals with the evaluation of said waste and determines the cause which led to the generation of the defects, with a considerable use of time in testing the products which can also extend the delivery times, resources and related overall costs which make the whole process very far from attaining the optimum.

For this reason, the need is felt to make the test procedure of the small metal parts and the analysis of the measures more efficient and safer also with a view to preventing the defects, also in relation to the design and intended use features.

The technical problem underlying the present invention is therefore to devise a method which allows on the one hand to optimize and automate the production and test processes and at the same time to ensure as certainly, efficiently, objectively and rapidly as possible the generation of reliable data with which the production is to be evaluated.

Another object is to identify the production trend so as to predict with a high degree of confidence the residual life of the production tools which tend to form defects, and which, without targeted interventions, within a limited number of cycles would produce small parts which would fall no more within the defined design parameters.

A further object is to provide a method which is generally reproducible continuously in an industrial production chain, without the need for important adaptations which are specific to each context of application.

Another object is to provide the use of apparatuses which are constructively and operatively simple so as to allow an easy manufacture and use thereof for technicians.

An object of the invention is clearly to keep costs competitive and in line with the field requirements.

An object of the invention is also to provide a method which can be adapted to different contingent needs, heading to add or reverse production steps which are specific for the desired application.

A further object is to provide solutions which can be remotely operated and tested.

Finally, a further object of the invention is to provide a production method which can be implanted within the control cycles by means of immediate targeted interventions.

### Summary of the invention

The solution idea underlying the present invention is to provide a new production and control method of the small metal parts with a high automation content which produces reliable data in the quality control of the small metal parts to be adopted for the production evaluation and as an automatic control plan for the following steps, increasing the production efficiency.

Based on this solution idea the technical problem is solved by a quality control automatic method in the production of small metal parts, comprising the following steps:
- provision of a quality control automatic apparatus on a sample basis of small metal parts;
- connection of a control system to the quality control automatic apparatus on a sample basis;
- first storage in the control system of reference characteristic parameters of a plurality of typologies of small metal parts;
- second storage in the control system of admissible ranges of acceptance threshold values for each characteristic parameter of said plurality of typologies of small metal parts;
- selection and pick-up of a sample group of a plurality of small metal parts from the plurality of typologies of small metal parts;
- typology test of small parts of the sample group by automatic acquisition and comparison with the reference characteristic parameters;
- pick-up and automatic measurement of each small metal part of the sample group;
- automatic division of the sample group into a first portion of compliant small metal parts and a second portion of non-compliant small metal parts based on the admissible ranges of acceptance threshold values;
- automatic analysis of the control system of dimensional data obtained from the sample group;
- validation of the dimensional data of the second portion of non-compliant small metal parts;
- uploading of the dimensional data in a memory device;
- interpolation of a time evolution of the dimensional data in subsequent data acquisitions;
- display of the interpolation and implementation of correction operations.

"Acceptance threshold values" mean a plurality of preset indices in the control system which, once exceeded, identifies the tendency of the measured values to approach the acceptable dimensional tolerance values for a specific small metal part and which therefore allows to identify any formation of a problem in a production before it occurs and generates the formation of waste.

Advantageously, the method according to the invention allows to make the production more efficient through the reduction of the production of waste, preventing the formation of defects by intercepting the cause of the formation of the defects even before they occur so as to exit the tolerances provided for the small metal parts, and optimizing the production settings due to the greater amount of controls performed in a more rapid time, with an automatic feedback as well.

This ensures an accurate and reliable automation of the production process, which is suitable for a continuous production process of components designed for the mass production and implementable in a plurality of specific applications.

It is specified that the automatic division step generally represents a division within the control system.

In preferred embodiments, this automatic division step can also provide a physical division between the first portion of compliant small metal parts and the second portion of non-compliant small metal parts.

Advantageously, the method according to the invention comprises a test step of the admissible ranges of acceptance threshold values by means of at least two test stations, at least one of said two test stations comprising at least two cameras adapted to detect related different perspectives of each small metal part of said sample group in said automatic measurement step.

A processing of at least one captured image in said at least two test stations is performed here.

Specifically, the method according to the invention can comprise at least one test step of the admissible ranges of acceptance threshold values through a disjoint or joint processing of images captured from different perspectives.

Preferably, the present solution allows to detect different perspectives of each small metal part of said sample group.

There is preferably a system for the sequential automatic movement of each small metal part from one station to the next one.

Advantageously, the present solution allows to test in a highly accurate manner each small metal part of the sample group and rapidly detect the presence of defects in different positions.

More preferably, in said at least one of the at least two test stations in which a movement and automatic rotation step of each small metal part of the sample group with respect to the at least two cameras is provided.

Advantageously, the present solution allows to keep the at least two cameras static and to ensure a repositioning of each small part of the sample group in the detection of any defect. This solution proves to be particularly suitable in the test of small metal parts from all the perspectives of interest.

More preferably, the at least one of the at least two test stations comprises at least three cameras arranged so as to frame the piece in line with the rotation axis of the station, orthogonally to the rotation axis of the station and diagonally to the rotation axis of the station respectively. The rotation of the test station around its own axis is controlled through the camera arranged in line with the rotation axis, so as to precisely align each small metal part with the other cameras arranged off-axis.

Preferably, the method according to the invention further provides an independent calibration step for each of the at least two cameras of the control system for a reduction of the measurement errors of the quality control automatic apparatus, intended to compensate for the optical and mechanical errors which are present.

Advantageously, the present solution allows to modify the detection settings of the parameters to be compared with those stored in the control system, so as to minimize the errors due to a distorted image of the analysed small metal parts of the sample group.

Still preferably, the validation step provides a setting step of at least one of the dimensional data in comparison to a standard reference sample referred to the international measurement system and a calibration step adapted to compensate for the instrumental measurement errors.

Still preferably, the validation step provides a test step of the reproducibility of the instrumental response for at least one of the dimensional data.

Advantageously, the present solution allows to identify any measurement error and to correct it, as well as to keep track of this modification made downstream of the first analysis.

Still preferably, the typology test step of the sample group provides a scan of a barcode related to each of the typologies of small metal parts.

Advantageously, the present solution allows a simple identification of the typology of small metal parts of the sample group and an uploading in sequence of the related parameters to be adopted into the quality control automatic apparatus.

Preferably, the typology test step of the sample group can provide the comparison with a factory production list loaded in the control system.

Advantageously, the present solution allows a simple identification of the typology of small metal parts of the sample group through the typology test of instantly produced small metal parts.

Still preferably, the method according to the invention further comprises an update step of the reference characteristic parameters and of the admissible ranges of acceptance threshold values upon each variation of the sample group.

The present solution advantageously allows to automatically update the control of the small metal parts regardless of how the sample group is selected.

Preferably, the pick-up step of each small metal part is carried out by means of at least one cobot.

Advantageously, this solution proves to be rapid and automatic and not affected by human errors for the correct positioning of the sample group into the quality control automatic apparatus.

Still preferably, the method comprises an analysis and validation step, through MSA procedures or other test procedure, of the quality control automatic apparatus and of the related control system.

Preferably, the method according to the invention further comprises the provision of a 100% control machine and a control step of the small metal parts downstream of the quality control automatic apparatus.

Advantageously, after performing an analysis on the production trend which is thereby optimized, a further control of all the produced small metal parts is provided, a control which is synergic with the above quality control which provides a control plan in a computer form, to be uploaded into the machines which are designated for the 100% control.

Still preferably, the pick-up step of a sample group comprises an automatic pick-up of the small metal parts and automatic positioning of the sample group into the quality control automatic apparatus.

Advantageously, the present solution also allows the transport step between production and quality control automatic apparatus to be automated.

Preferably, the interpolation step of a time evolution is carried out by means of a neural network.

Advantageously, the present solution allows to have a machine learning from the tests performed on the small metal parts and to automatically correct control and validation conditions and parameters.

Still advantageously, the adoption of a neural network ensures a high fault tolerance due to a parallel architecture and a noise tolerance, i.e. the ability to operate, in many cases, in a correct manner despite imprecise or incomplete inputs.

The features and advantages of the method according to the present invention will be more apparent from the following description of an exemplary embodiment thereof given by way of non-limiting example with reference to the attached drawings.

### Brief description of the drawings

In the drawings:
- Figure 1 shows a schematic representation of the quality control method in the production of small metal parts according to the present invention with respect to the prior art;

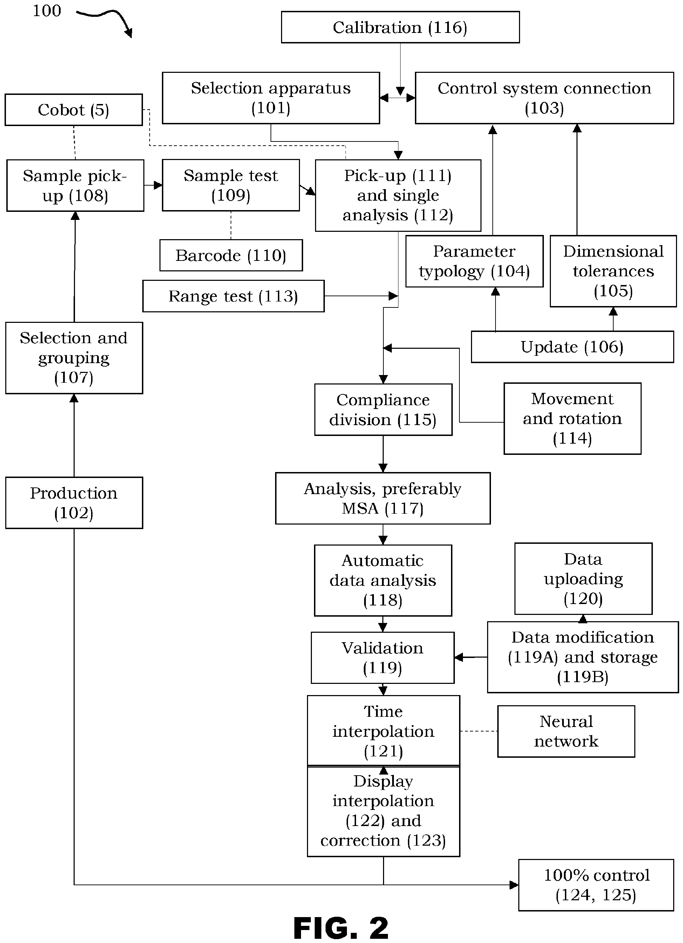

- Figure 2 shows a block diagram of the method of Figure 1;

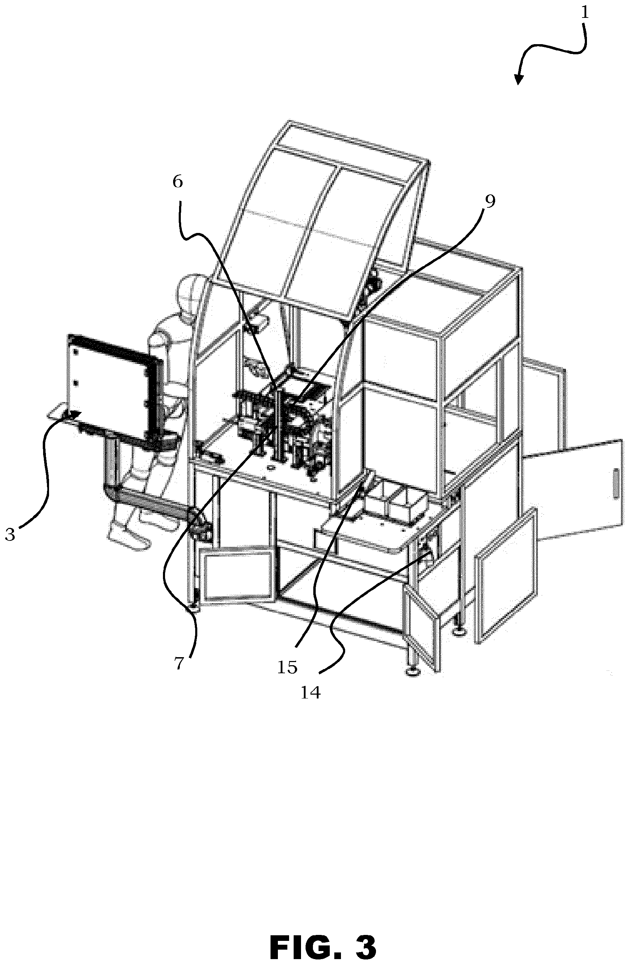

- Figure 3 shows a quality control automatic apparatus adopted in the method of Figure 1;
- Figure 4 shows a schematic top view of the quality control automatic apparatus of Figure 3, while Figure 4a shows a detail of the quality control automatic apparatus of Figure 3.

### Detailed description

With reference to the figures, a quality control method in the production of small metal parts according to the present invention is globally and schematically indicated with 100.

First of all, the method 100 provides the provision 101 of a quality control automatic apparatus 1, equipped with its own quality control instrumentation, which is placed downstream of a production 102 of a plurality of small metal parts by means of at least one production line 2 for small metal parts, the latter production step 102 not limiting the present invention.

Preferably, the provision of one or more production lines 2 of small metal parts in series is therefore provided, each of them being intended for the production of a plurality of typologies of small metal parts, each production line can produce one or more typologies of small metal parts and a production sequence of small metal parts for each production line is provided.

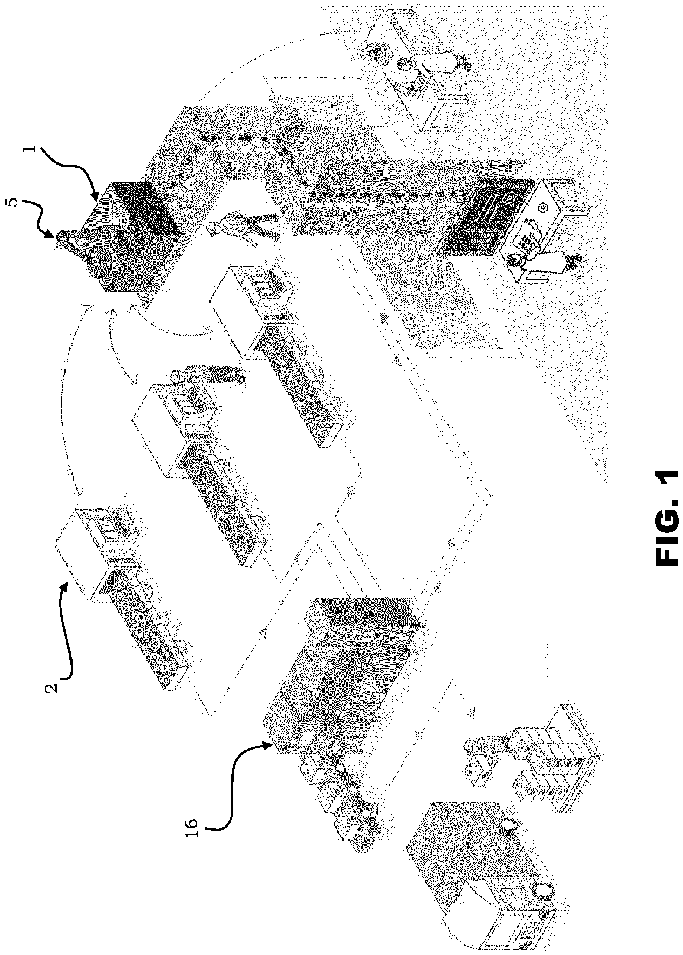

The presence of the quality control automatic apparatus 1, with the features detailed herebelow, allows to integrate, as can be specifically seen in Figure 1, the laboratory study step by specialized operators, which is expensive in terms of time, required personnel and related costs associated with an automated, robust, reliable and practical-to-use step.

The laboratory study can thus be intended for the sole tests of the destructive typology for testing, for example the mineralogy of the small metal parts, for a few small metal parts in the presence of specific needs, while most of the quality control is performed in an effective, rapid and reliable manner by means of what is further explained herebelow.

The laboratory can further be kept as a validation redundancy of the quality control automatic apparatus 1 to be possibly occasionally performed.

The quality control automatic apparatus 1 is connected 103 to a control system 3 which manages the operation thereof, which is open to data interfacing with the factory information system.

In the control system 3 a first storage 104 of reference characteristic parameters of a plurality of typologies of small metal parts belonging to a control plan associated with a catalogue of small parts and a second storage 105 of admissible ranges of acceptance threshold values for each of the plurality of typologies of small metal parts are performed.

"Control plan" means a series of measures and attributes (in particular the parameters which are subject to control, the respective admissibility thresholds and the indication of the release version) associated with each typology of small metal parts which is drawn as a reference from a catalogue of small parts which are available to the user and which the latter controls and/or forms.

The stored and adopted specific control plan can be a subset or an adaptation of a centralized control plan containing common control features. The admissibility thresholds can therefore differ among different specific control plans, in which non-automatable controls cannot be uploaded.

Therefore, for each measure and for each attribute the admissible range of acceptance threshold values is stored and for each control plan the release version is also stored, so that for each of the metal typologies belonging to the catalogue there is always at least one control plan which can be identified as the "last release", containing at least one feature which is subject to control and at least one acceptance threshold for this feature.

In other words, the control system is thus able to identify the typology of small metal parts inserted into the quality control automatic apparatus 1 and the physical and dimensional features associated therewith and to set the admissible ranges which must be in line with the design so that the small metal parts is accepted.

Preferably an automatic update step 106 of these stored dimensional parameters and ranges is also provided, so as to adapt the quality control automatic apparatus 1 to different necessary tolerances or to different models of produced small metal parts.

A selection and an automatic grouping 107 of the small metal parts according to the plurality of typologies of small metal parts are then performed.

The selection can be in groups of a single typology or heterogeneous depending on the subsequent selection and sorting needs.

A pick-up step of a sample group 108 to be sent to the quality control automatic apparatus 1 to perform the controls required for the evaluation of the production line 2 is thus performed.

In a preferred and non-limiting embodiment the pick-up is performed in an automatic manner, maximizing the automation of the whole method, for example by means of a cobot.

The sample group thus undergoes a typology test step 109 by automatic acquisition and comparison with the reference characteristic parameters.

Preferably, but not limitedly, the selection of the typology of small metal parts is performed by means of a scan 110 of a barcode associated with each of the small metal parts of the sample group.

The list of the production machines can also be displayed and, once the production machine is selected, the last small metal parts made by said machine can be highlighted, from which it is possible to directly select the desired one.

Nothing prevents to provide another selection mode.

In the test step 109 it is verified that each small metal part is part of the small parts catalogue stored in the quality control apparatus 1, that for the typology of small metal parts, in the quality control apparatus 1 there is at least one control plan, that the last version of the control plan stored in the control apparatus matches with the last version of the control plan which is available in the company information systems, and further possible tests so as to correct and manage any anomaly in these tests.

Upon each uploading, the quality control automatic apparatus 1 preferably verifies on an associated management system that the adopted control plan is the last available one.

In the quality control automatic apparatus 1 adopted in the present and non-limiting embodiment, the supply of the sample group into the quality control automatic apparatus 1 is performed through two drawers 4 for the automatic supply, which are extractable and backlit and in which the pieces can be freely oriented.

Each drawer 4 is adapted to contain up to thirty-six pieces, so as to simplify and accelerate the manual uploading operations.

In the quality control automatic apparatus 1 there is thus a pick-up 111 and automatic measurement 112 step of each small metal part of the sample group.

Preferably, in the present exemplary and non-limiting embodiment, the pick-up step 111 of each small metal part is carried out by means of at least one cobot 5.

On the one hand this obviously allows an automation of the process, which is repeatable in a reliable and optimum manner.

Furthermore, the cobot 5 ensures the maximum flexibility in the ability to grip and move pieces, without resorting to invasive mechanical protections like for a robot.

Moreover, preferably, the cobot 5, in the pick-up step 111, also controls, as a further test, that the small metal parts positioned on the drawer 4 have dimensions which are compatible with what is expected.

Still preferably, the cobot 5 also provides an integrated video camera (not shown), which, based on the asymmetries of the small metal parts seen in plan, allows the cobot 5 itself to draw the small metal parts so as to position them always with the same orientation in the next station of the quality control automatic apparatus 1.

Specifically, in the present exemplary and non-limiting embodiment, the method 100 comprises, in the quality control automatic apparatus 1, a test step of the admissible ranges 113 of acceptance threshold values by means of at least two test stations 6, 7, at least one of said two test stations 6, 7 comprising at least two cameras, in the present embodiment three cameras 10, 11, 12 adapted to detect related different perspectives of each small metal part in the automatic measurement step 112.

In the present embodiment at least one of the two test stations 6, 7 is equipped with a camera or video camera of the "bottom" type and it can capture directly lighted and/or backlit images.

Still preferably, in the present exemplary and non-limiting embodiment, a linear axis 9 is provided to bring the small metal parts from one of the two test stations 6, 7 to the other.

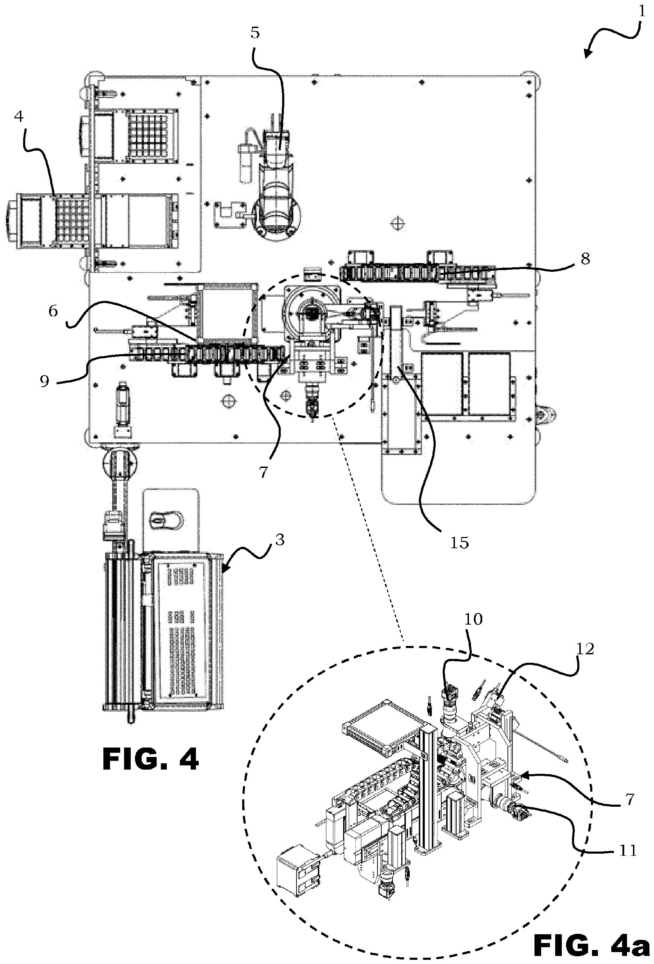

Another one of the at least two test stations, which can be specifically seen in Figure 4a, preferably provides at least two cameras, in the present embodiment more preferably three cameras or video cameras 10, 11, 12 differently arranged around the small metal parts to be analysed, in particular above 10, laterally 11 and with a perspective view 12.

In general, the upper 10 and lateral 11 cameras can operate both with direct light and with backlight.

The upper camera 10, exploiting the backlight, can be used for a perfect alignment of the piece in front of the lateral camera 11, so as to minimize the light diffraction effects on the edges of the small metal parts.

The camera 12 diagonally arranged in perspective generally operates only with direct light.

In this test station an automatic rotational movement step 114 of the small metal parts with respect to the at least two, in this preferred case three, cameras 10, 11, 12 is further provided.

A processing of at least one captured image in the at least two test stations 6, 7 is performed, the test of the admissible ranges of acceptance threshold values through a disjoint or joint processing of images captured from different perspectives can be provided.

Downstream of the two test stations 6, 7 and related analysis of each small metal part of the sample group an automatic division step 115 of the sample group into a first portion of compliant small metal parts and a second portion of non-compliant small metal parts based on the admissible ranges of acceptance threshold values are provided.

In other words, at the end of the measurement cycle the analysed small metal parts are subdivided as separate files in the control system 3.

In the present exemplary and non-limiting embodiment, a physical subdivision of the analysed small metal parts is further performed, which are sent, through a second linear axis 8, to a collection point of compliant pieces 14 if they meet all the requirements of the control plan, or are sent, in general, on a discharge chute 15 on a work plan, if they have one or more measures out of acceptance threshold values or even out of dimensional tolerance of the small metal parts.

This allows, either automatically once again or with the intervention of an operator, to rapidly identify the small parts out of acceptance threshold values and to intervene to verify or complete any failed measurement without the need to repeat the measurements also on small metal parts which proved to be compliant, which are instead considered as generally reliable.

In the present embodiment the control system 3 undergoes a metrological validation, setting and possible calibration step 116 by testing the response of the instrumentation in the measurement of known reference samples and the setting of correction parameters of the distortion of the optics, 117, for a reduction of measurement errors of the quality control automatic apparatus 1.

In other words, these represent both hardware and software interventions to minimize the disturbances mainly due to the lens distortion on the measurement and in general to all the optical, mechanical and electronic systematic interferences intervening on the measurement.

In the present embodiment, the control system 3 comprises guided functions for supporting the execution of the procedures of metrological validation and calculation of the calibration parameters.

In the present embodiment, the control system 3 further comprises a system for processing the images captured by the cameras, adapted to the interpretation thereof. This system is based on computer vision information algorithms, which are freely parameterizable to obtain measures being as stable and precise as possible. Among the adoptable parameters there is a category adapted to define the features of the software filters which reduce the dirt interference on the measurement, 116, an issue which is particularly felt in the production environment.

Moreover, the control system 3 preferably performs an analysis and validation step, through MSA procedures 117 or other test procedure, of the quality control automatic apparatus 1 and of the related control system 3.

In other words, an evaluation is preferably provided with the purpose of determining whether the variability of the results obtained with the quality control automatic apparatus 1 is acceptable in relation to the tolerance field prescribed for the small parts which are subject to measurement.

This ensures a further reliability of the results of the measurements and, consequently, reliability of the analysis of the results, as well as an optimization of the measurement process, depending on the feature to be kept under control.

In the here-presented specific case, preferably, in the case of measures obtained from backlit images a standard deviation of the measure σ<1 pm is prescribed, while in the case of measures obtained from images being subject to direct lighting a standard deviation of the measure σ<2 pm is prescribed.

The ability of the instrumentation to detect, pursuant to the regulation and good practice, measured values of a quality which is adequate to the acceptance threshold values is associated to these values.

The method 100 according to the invention thus provides an automatic analysis step 118 of the control system 3 of dimensional data obtained from the sample group.

In other words, also based on the reliability of the obtained results ensured by the validation step of the measurement system 117, the control system 3 is able to extrapolate the most significant dimensional data obtained in the quality control automatic apparatus 1.

Downstream thereof, a validation step 119 of the dimensional data of the second portion of non-compliant small metal parts is provided.

This validation step 119 can provide a modification step 119A of at least one of the dimensional data and a storage step 119B of the modification step in a memory device (not shown).

This allows to identify any measurement error and to modify it, as well as to keep track of this modification made downstream of the first analysis.

The validation process is designed to minimize the risks of dirtying a centralized computer system before downloading the dimensional data and, at the same time, to allow, either by an automatic operation or by the intervention of an operator, to solve the anomalies without repeating the whole control.

The possible anomaly can be accepted, can result in the repetition of the measurement or can be manually corrected.

Once validated, an uploading step 120 of the dimensional data into the memory device is provided.

Preferably, they are downloaded in the centralized computer system.

It is also possible to download all the acquired images or a selection of the most significant ones, in other words the images from which data are obtained.

The method 100 allows to select if and which images to store for subsequent tests, i.e. if no image, only an image in which the non-compliant measure is seen or all the images of the small parts which have at least one non-compliant measurement.

In addition to the above it is also possible to store a percentage (defined by a parameter) of the images of compliant small parts.

The control system 3 then carries out an interpolation step 121 of a time evolution of the dimensional data in subsequent data acquisitions, so as to identify the trend, in particular, of measures related to the wear of the production tools, and a subsequent display 122 of the interpolation and implementation 123 of precise correction operations is therefore provided.

Preferably, the interpolation step 121 is carried out by means of a neural network, which allows to have a machine learning from the tests performed on the small metal parts and to automatically correct control and validation conditions and parameters.

Moreover, advantageously, the adoption of a neural network ensures a high fault tolerance due to a parallel architecture and a noise tolerance, i.e. the ability to operate, in many cases, in a correct manner despite imprecise or incomplete inputs.

The method 100 can further provide a provision step 124 of a 100% control machine 16 and a control step 125 of the small metal parts downstream of the quality control automatic apparatus 1.

Therefore, after performing an analysis on the production trend which is optimized, a further control of all the produced small metal parts is provided, a control which can be speeded up given the previous optimization which identified the features which have a higher probability of presenting defects.

Advantageously, the present solution improves the overall reliability of a production line, automating the control and test steps, optimizing the expected times and costs.

In other words, the method according to the invention allows to automatically obtain reliable data from a quality control in the production of the small metal parts.

Advantageously, the present solution allows to test several dozens of similar but different small metal parts, with tolerances up to 5 cents, with a range even comprised between 10 and 100 identical small parts to be subject to a measurement for each work cycle, up to 50 measurements for each small part, on 6 external faces and 4 internal ones and some measures being detectable in particular on images with direct lighting.

Still advantageously, the data acquired in the control of small parts are highly reliable, due to the combined presence of the control plan test, the piece guided selection and the data validation, which are clearly added to the precision ensured by the instrumental validation method of the control system.

Finally, advantageously, the solution proves to be perfectly in line with the mass production requirements, both in terms of implementation within pre-existing structures and in terms of preparation required to operators, who deal with the high-level supervision, in understanding the method and in terms of simplicity of use.

The person skilled in the art will understand that the presented embodiment can be subject to various modifications and variations, according to specific and contingent requirements, all falling within the scope of protection of the invention, as defined by the following claims.

For example, nothing prevents to provide a quality control automatic apparatus with further control specifications or with obvious modifications and/or variants to the control stations compared to the above-mentioned exemplary ones, said modifications and variants being included in the scope of said claims.

## Claims

1. Quality control automatic method (100) in the production of small metal parts, comprising the following steps:
- provision (101) of a quality control automatic apparatus (1) on a sample basis of small metal parts;
- connection (103) of a control system (3) to said quality control automatic apparatus (1) on a sample basis;
- first storage (104) in said control system (3) of reference characteristic parameters of a plurality of typologies of small metal parts;
- second storage (105) in said control system (3) of admissible ranges of acceptance threshold values for each of said plurality of typologies of small metal parts;
- selection (107) and pick-up of a sample group (108) of a plurality of small metal parts from said plurality of typologies of small metal parts belonging to a control plan;
- typology test (109) of said sample group by automatic acquisition and comparison with said reference characteristic parameters;
- pick-up (111) and automatic measurement (112) of each small metal part of said sample group;
- automatic division (115) of said sample group into a first portion of compliant small metal parts and a second portion of non-compliant small metal parts based on said admissible ranges of acceptance threshold values;
- automatic analysis (118) of said control system (3) of dimensional data obtained from said sample group;
- validation (119) of said dimensional data of said second portion of non-compliant small metal parts;
- uploading (120) of said dimensional data in a memory device;
- interpolation (121) of a time evolution of said dimensional data in subsequent data acquisitions;
- display (122) of said interpolation and implementation (123) of correction operations.

2. The method (100) according to claim 1, further comprising a test step of the admissible ranges (113) of acceptance threshold values by means of at least two test stations (6, 7), at least one of said two test stations (6, 7) comprising at least two cameras (10, 11, 12) adapted to detect related different perspectives of each small metal part of said sample group in said automatic measurement step (112).

3. The method (100) according to claim 2, wherein said at least one of said two test stations (6, 7) comprises at least three cameras (10, 11, 12) arranged so as to frame a small part in line with the rotation axis of the test station (6, 7), orthogonally to the rotation axis of the test station (6, 7) and diagonally to the rotation axis of the test station (6, 7) respectively.

4. The method according to claim 2 or 3, wherein in said at least one of said at least two test stations (6, 7) a movement and automatic rotation step (114) of each small metal part of said sample group with respect to said at least two cameras (10, 11, 12) is provided.

5. The method (100) according to any one of claims 2 to 4, further comprising an independent calibration step (116) for each of said at least two cameras (10, 11, 12) for a reduction of measurement errors of said quality control automatic apparatus (1).

6. The method (100) according to any one of claims 1 to 5, wherein said validation step (119) provides a modification step (119A) of at least one of said dimensional data and a storage step (119B) of said modification step (119A) in said memory device.

7. The method (100) according to any one of claims 1 to 6, wherein said typology test step (109) of said sample group provides a comparison with a factory production list loaded in said control system (3) or a scan of a barcode (110) on each of said small metal parts.

8. The method (100) according to any one of claims 1 to 7, wherein said pick-up step (111) of each small metal part is carried out by means of at least one cobot (5).

9. The method (100) according to any one of claims 1 to 8, further comprising at least one update step (106) of said reference characteristic parameters and of said admissible ranges of acceptance threshold values upon each variation of said sample group.

10. Method (100) according to any one of claims 1 to 9, wherein said pick-up step of a sample group (108) comprises an automatic pick-up of said small metal parts and automatic positioning of said sample group into said quality control automatic apparatus (1).
